# EUROPÄISCHE PATENTANMELDUNG

(11) **EP 3 889 487 A1**
(43) Veröffentlichungstag der Anmeldung: **06.10.2021**
(21) Anmeldenummer: 20166593.2
(22) Anmeldetag: 30.03.2020
(51) Int. Cl.: F16P 3/14

(54) **WARNSYSTEM FÜR DIE ÜBERWACHUNG EINES SCHUTZ- UND DETEKTIONSBEREICHS IN DER UMGEBUNG EINER GEFAHRENQUELLE**

(71) Anmelder: Siemens Aktiengesellschaft, 80333 München (DE)
(72) Erfinder: Walter, Maximilian, 90408 Nürnberg (DE); Thon, Ingo, 85630 Grasbrunn (DE)

(57) **Zusammenfassung**

Die Erfindung betrifft ein Warnsystem für die Überwachung eines Schutz- und Detektionsbereichs in der Umgebung einer Gefahrenquelle, insbesondere im Bereich von Maschinen oder Schaltanlagen oder Anlagen mit einem erhöhten Wärmeaufkommen, mit:
- einem Detektionsbereich, welcher über zumindest zwei Detektionselemente definiert ist;
- einer Auswerteeinheit (11), welche mittels der Detektionselemente ermittelte Messwerte auswertet und einem ordnungsgemäßen Prozess oder einer gefährlichen Annäherung durch Personen zuordnet; und
- einer Warnanlage, welche im Fall einer gefährlichen Annäherung durch Personen durch ein Auslösesignal eine Warnung übermittelt,
sowie Verfahren zur Überwachung eines Schutz- und Detektionsbereichs mittels dieses Warnsystems.

## Beschreibung

Die Erfindung betrifft ein Warnsystem für die Überwachung eines Schutz- und Detektionsbereichs in der Umgebung einer Gefahrenquelle, insbesondere im Bereich von Maschinen oder Schaltanlagen oder Anlagen mit einem erhöhten Wärmeaufkommen, mit einem Detektionsbereich, einer Auswerteeinheit und einer Warnanlage, sowie Verfahren zur Überwachung eines Schutz- und Detektionsbereichs mittels dieses Warnsystems.

Die Annäherung bzw. Bewegung eines Menschen an eine Gefahrenquelle z.B. ein bewegliches Maschinenteil, eine Presse oder eine Hitzequelle muss funktional sicher erkannt werden, um eine potenzielle Gefährdung zu vermeiden. Davon zu unterscheiden ist jedoch, die Bewegung von Partikeln, wie z.B. Papierfetzen oder auch Holzspäne, welche aus einer Maschine oder einem Schaltgerät herausgeschleudert werden und nicht zu einer entsprechenden Detektion führen dürfen, um einen unnötigen Anlagenausfall zu verhindern.

Die aus dem Stand der Technik bekannten Verfahren treffen prinzipiell keine Unterscheidung zwischen Menschen und anderen beweglichen Gegenständen, welche den Detektions- und Schutzbereich in der Umgebung einer Gefahrenquelle durchbrechen. Daher werden in die Anlagen sogenannte Muting-Funktionen implementiert, um den Maschinen Material zuführen, bzw. Material abtransportieren zu können, ohne die Sicherheitsfunktion auszulösen. Diese Muting-Funktionen erfordern jedoch zusätzliche Sensoren, die angeliefertes Material erkennen und ein entsprechendes Signal an die Sicherheitsfunktion absetzen. Unvorhergesehen auftretende Ereignisse, wie z.B. das Herausschleudern von Papierfetzen oder Holzspänen, wird von der Muting-Funktion nicht erkannt. In diesen Fällen wird die Sicherheitsfunktion ausgelöst und die Anlage zeigt eine Betriebsstörung an.

Demgemäß besteht die Aufgabe der vorliegenden Erfindung darin, ein Warnsystem für Personen vor einer Gefahrenquelle, insbesondere im Bereich von Maschinen oder Schaltanlagen oder Anlagen mit einem erhöhten Wärmeaufkommen, zu schaffen sowie Verfahren zur Überwachung eines Schutz- und Detektionsbereichs mittels dieses Warnsystems anzugeben.

Diese Aufgabe wird erfindungsgemäß durch ein Warnsystem nach Anspruch 1 sowie jeweils durch ein Verfahren nach Anspruch 10 oder 11 gelöst. Vorteilhafte Aus- und Weiterbildungen, welche einzeln oder in Kombination miteinander eingesetzt werden können, sind der Gegenstand der abhängigen Ansprüche.

Erfindungsgemäß wird diese Aufgabe gelöst durch ein Warnsystem für die Überwachung eines Schutz- und Detektionsbereichs in der Umgebung einer Gefahrenquelle, insbesondere im Bereich von Maschinen oder Schaltanlagen oder Anlagen mit einem erhöhten Wärmeaufkommen, mit:
- einem Detektionsbereich, welcher über zumindest ein Detektionselement definiert ist;
- einer Auswerteeinheit, welche mittels des Detektionselements ermittelte Messwerte auswertet und einem ordnungsgemäßen Prozess oder einer gefährlichen Annäherung durch Personen zuordnet; und
- einer Warnanlage, welche im Fall einer gefährlichen Annäherung durch Personen durch ein Auslösesignal eine Warnung übermittelt.

Der Kern der Erfindung besteht in einem Warnsystem, welches auf einem Lichtgitter mit zwei parallelen Ebenen aus Lichtschranken basiert. Der Abstand zwischen den beiden Ebenen ist d, ein typischer Wert für d könnte z.B. 5cm sein. Aus einem Schaltschrank oder einer Maschinenanlage herausgeschleuderte Gegenstände, welche einen Durchmesser kleiner d haben, können jeweils nur eine der beiden Ebenen gleichzeitig unterbrechen. Konfiguriert man das Lichtgitter so, dass beide Ebenen gleichzeitig unterbrochen sein müssen, um die Sicherheitsfunktion auszulösen, führen kleinere herausgeschleuderte Gegenstände nicht zur Auslösung der Sicherheitsfunktion.

Weiterhin kann das Lichtgitter so konfiguriert werden, dass die Sicherheitsfunktion nur dann ausgelöst wird, wenn die äußere Ebene vor der inneren Ebene unterbrochen wird, aber nicht, wenn die innere vor der äußeren Ebene unterbrochen wird, und die Unterbrechung insgesamt nur für kurze Zeit z.B. kleiner 4s erfolgt. Dies ermöglicht eine Unterscheidung hinsichtlich der Bewegungsrichtung. Dadurch kann ein potenziell gefährliches Eindringen in den Schutzraum von einem ungefährlichen Herausschleudern z.B. auch größerer Papierfetzen sicher unterschieden werden. Zusätzlich führt das Abführen von Werkstücken oder Material prinzipiell nicht mehr zu einem Auslösen der Sicherheitsfunktion und zwar ohne dass ein explizites Muting erforderlich ist.

Durch Drehung einer Ebene um 90° beispielsweise die vordere Ebene von links nach rechts, die hintere Ebene von oben nach unten, ist es zusätzlich möglich, die X, Y-Koordinaten der Unterbrechung sicher zu lokalisieren. Dies kann dazu genutzt werden, ortsabhängig bestimmte Sicherheitsfunktionen auszulösen z.B. nur die sich in der Nähe der Unterbrechung befindlichen Geräte stillzusetzen.

Prinzipiell ist zum einen eine fest-programmierte Variante der Erfindung denkbar, zum anderen könnte die Erfindung auch programmierbar realisiert werden, so dass der Endanwender die Details der Sicherheitsfunktion festlegen kann.

Lichtschranken bestehen aus einer Lichtstrahlenquelle, dem Sender, und einem Sensor, dem Empfänger für diese Strahlung. Als Lichtquelle kommen unter anderem Leuchtdioden mit einer Wellenlänge von 660 nm, sichtbares rotes Licht oder Infrarot-LEDs mit 880-940 nm im Infrarotbereich, zum Einsatz.

Eine vorteilhafte Ausführungsform des erfindungsgemäßen Warnsystems kann darin bestehen, dass das Detektionselement als Lichtgitter mit zumindest zwei Lichtschranken ausgebildet ist.

Es entspricht einer speziellen Ausführungsform des erfindungsgemäßen Warnsystems, dass das Detektionselement als Einweg-Lichtschranke oder als Reflexions-Lichtschranke oder als Reflexions-Lichttaster oder als faseroptische Lichtschranke ausgebildet ist.

Eine Fortführung des Konzepts für das erfindungsgemäße Warnsystem kann darin bestehen, dass der Detektionsbereich definiert ist durch ein erstes Detektionselement, welches näher an der Gefahrenquelle positioniert ist als ein zweites Detektionselement, welches parallel und in einem Abstand d hinter dem ersten Detektionselement platziert ist.

Eine Erweiterung einer speziellen Ausgestaltung des erfindungsgemäßen Konzepts für das Warnsystem kann vorsehen, dass der Detektionsbereich derart ausgebildet ist, dass eine Person die Grenzen des Detektionsbereichs vor einer Gefahrenquelle, welche durch Detektionselemente definiert sind, gleichzeitig durchbricht.

Eine vorteilhafte Ausführungsform des erfindungsgemäßen Warnsystems kann darin bestehen, dass die Auswerteeinheit einen Algorithmus umfasst, welcher einen Prozessablauf analysiert und eine Zuordnung trifft, wie der Detektionsbereich durchbrochen wurde, von der näher an der Gefahrenquelle positionierten Detektionsgrenze zur weiter entfernt liegenden oder umgekehrt.

Es entspricht einer speziellen Ausführungsform des erfindungsgemäßen Warnsystems, dass die Auswerteeinheit einen Algorithmus umfasst, welcher einen Prozessablauf analysiert und auswertet, ob beide Detektionsgrenzen gleichzeitig durchbrochen wurden.

Eine Erweiterung einer speziellen Ausgestaltung des erfindungsgemäßen Konzepts für das Warnsystem kann vorsehen, dass durch Drehung des Detektionsbereichs um 90° die Position einer Unterbrechung in Form von Koordinaten zu ermitteln ist.

Eine vorteilhafte Ausführungsform des erfindungsgemäßen Warnsystems kann darin bestehen, dass das Warnsystem mit einer vorgegebenen Programmierung oder frei programmierbar ausgebildet ist.

Die Aufgabe der vorliegenden Erfindung wird außerdem gelöst durch ein erstes Verfahren zur Überwachung eines Schutz- und Detektionsbereichs mittels eines Warnsystems mit einem Detektionsbereich, einer Auswerteeinheit und einer Warnanlage mit den Schritten:
- Aufnahme von Messwerten mittels eines Detektionselements, welches den Detektionsbereich definiert;
- Übermitteln der Messergebnisse an eine Auswerteeinheit; wobei die Auswerteeinheit einen Algorithmus umfasst, welcher einen Prozessablauf analysiert und eine Zuordnung trifft, wie der Detektionsbereich durchbrochen wurde, von der näher an der Gefahrenquelle positionierten Detektionsgrenze zur weiter entfernt liegenden oder umgekehrt.

Zudem wird die Aufgabe gelöst durch ein zweites Verfahren zur Überwachung eines Schutz- und Detektionsbereichs mittels eines Warnsystems mit einem Detektionsbereich, einer Auswerteeinheit und einer Warnanlage mit den Schritten:
- Aufnahme von Messwerten mittels eines Detektionselements, welches den Detektionsbereich definiert;
- Übermitteln der Messergebnisse an eine Auswerteeinheit; wobei die Auswerteeinheit einen Algorithmus umfasst, welcher einen Prozessablauf analysiert und auswertet, ob beide Detektionsgrenzen gleichzeitig durchbrochen wurden.

Eine Erweiterung einer speziellen Ausgestaltung der erfindungsgemäßen Verfahren zur Überwachung eines Schutz- und Detektionsbereichs mittels eines Warnsystems kann vorsehen, dass die Auswerteeinheit die Warnanlage auslöst, wenn:
- der Detektionsbereich in Form der Detektionsgrenzen von der entfernter positionierten Detektionsgrenze zur nähergelegenen Detektionsgrenze unterbrochen wurde; oder
- beide Detektionsgrenzen gleichzeitig durchbrochen wurden.

Es entspricht einer speziellen Ausgestaltung der erfindungsgemäßen Verfahren, dass die Auswerteeinheit zur Überwachung des Schutz- und Detektionsbereichs eine Kombination aus zwei Algorithmen durchführt.

Weitere Ausführungen und Vorteile der Erfindung werden nachfolgend anhand von Ausführungsbeispielen sowie anhand der Zeichnung erläutert.

Dabei zeigt:

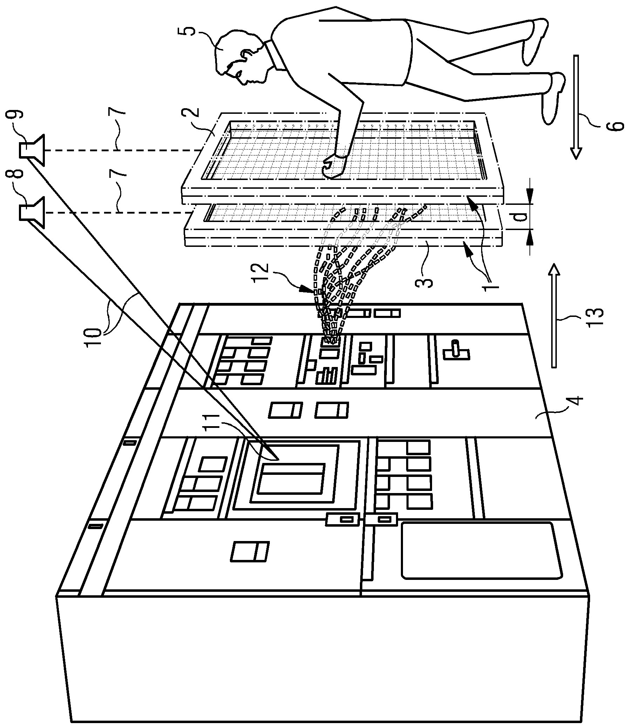

Fig. 1 in einer perspektivischen Darstellung ein erfindungsgemäßes Warnsystem mit einem Lichtgitter, welches aus zwei parallel, hintereinander positionierten Lichtschranken ausgebildet ist, vor einem Schaltschrank.
Fig. 1 zeigt ein erfindungsgemäßes Warnsystem mit einem Lichtgitter 1, welches aus zwei parallel, hintereinander positionierten Lichtschranken 2,3 ausgebildet ist, vor einem Schaltschrank 4. Der Schaltschrank 4 ist lediglich ein Beispiel. Es kann sich auch um eine Maschine z.B. um eine CNC-Fräse oder eine Drehbank oder Ähnliches handeln. Eine Person 5 kommt frontal aus einer Bewegungsrichtung 6 auf das Lichtgitter 1 zu und durchbricht nahezu gleichzeitig beide Lichtschranken 2, 3. In Folge seiner Bewegungsrichtung 6 wird von der Person 5 zunächst die Lichterschranke 2, welche einen größeren Abstand zum Schaltschrank 4 aufweist, durchbrochen. Unmittelbar im Anschluss durchbricht die Person 5 auch die Lichtschranke 3, so dass innerhalb einer kurzen Zeitperiode beide Lichtschranken 2, 3 jeweils ein Signal 7 an entsprechende Sensoren 8, 9 übermitteln. Es ist auch möglich, dass beide Signale 7 von einem Sensor empfangen werden. Die Sensoren 8, 9 übermitteln im Anschluss ein Signal 10 an eine Auswerteeinheit 11, welche mit einer Warnanlage verbunden ist.

Im Unterschied dazu durchbricht ein Partikelausstoß 12 aus dem Schaltschrank 4 in einer Bewegungsrichtung 13 die Lichtschranke 3 zuerst. Ein Abstand d ist zwischen den Lichtschranken 2, 3 so gewählt, dass ein Partikelausstoß 12 fast ausschließlich das Lichtgitter 3 durchbricht. Sollte es bei einem besonders starken Partikelausstoß 12 auch zu einer Signalwahrnehmung am Lichtgitter 2 kommen, so unterscheiden sich die Ereignisse in der Bewegungsrichtung, so dass sich ein Algorithmus einer Auswerteeinheit 11 auf die Auswertung der Bewegungsrichtung stützen lässt. Zudem lässt sich ein Algorithmus in der Auswerteeinheit 11 hinterlegen, der die Gleichzeitigkeit der durchbrochenen Lichtschranken 2, 3 auswertet.

Das erfindungsgemäße Warnsystem sowie die Verfahren zeichnen sich dadurch, dass eine Unterscheidung zwischen einem Partikelausstoß beispielsweise aus einem Schaltschrank oder einer Maschinenanlage und einer sich einer Gefahrenquelle nähernden Person getroffen werden kann, ohne dass ein Muting erforderlich ist. Die Bewegungsrichtung kann sicher bestimmt werden. Dadurch können herausgeschleuderte Partikel von Personen unterschieden werden. Material, das den Gefahrenbereich verlässt, kann ebenfalls sicher von Personen unterschieden werden.

### Bezugszeichenliste

- 1: Lichtgitter
- 2: Lichtschranke
- 3: Lichtschranke
- 4: Schaltschrank
- 5: Person
- 6: Bewegungsrichtung
- 7: Signal
- 8: Sensor
- 9: Sensor
- 10: Signal
- 11: Auswerteeinheit
- 12: Partikelausstoß
- 13: Bewegungsrichtung

## Patentansprüche

1. Warnsystem für die Überwachung eines Schutz- und Detektionsbereichs in der Umgebung einer Gefahrenquelle, insbesondere im Bereich von Maschinen oder Schaltanlagen oder Anlagen mit einem erhöhten Wärmeaufkommen, mit:
- einem Detektionsbereich, welcher über zumindest ein Detektionselement definiert ist;
- einer Auswerteeinheit (11), welche mittels des Detektionselements ermittelte Messwerte auswertet und einem ordnungsgemäßen Prozess oder einer gefährlichen Annäherung durch Personen zuordnet; und
- einer Warnanlage, welche im Fall einer gefährlichen Annäherung durch Personen durch ein Auslösesignal eine Warnung übermittelt.

2. Warnsystem nach Anspruch 1, **dadurch gekennzeichnet, dass** das Detektionselement als Lichtgitter (1) mit zumindest zwei Lichtschranken (2, 3) ausgebildet ist.

3. Warnsystem nach Anspruch 1 oder 2, **dadurch gekennzeichnet, dass** das Detektionselement als Einweg-Lichtschranke oder als Reflexions-Lichtschranke oder als Reflexions-Lichttaster oder als faseroptische Lichtschranke ausgebildet ist.

4. Warnsystem nach einem der Ansprüche 1 bis 3, **dadurch gekennzeichnet, dass** der Detektionsbereich definiert ist durch ein erstes Detektionselement, welches näher an der Gefahrenquelle positioniert ist als ein zweites Detektionselement, welches parallel und in einem Abstand d hinter dem ersten Detektionselement platziert ist.

5. Warnsystem nach einem der Ansprüche 1 bis 4, **dadurch gekennzeichnet, dass** der Detektionsbereich derart ausgebildet ist, dass eine Person die Grenzen des Detektionsbereichs vor einer Gefahrenquelle, welche durch Detektionselemente definiert sind, gleichzeitig durchbricht.

6. Warnsystem nach einem der Ansprüche 1 bis 5, **dadurch gekennzeichnet, dass** die Auswerteeinheit (11) einen Algorithmus umfasst, welcher einen Prozessablauf analysiert und eine Zuordnung trifft, wie der Detektionsbereich durchbrochen wurde, von der näher an der Gefahrenquelle positionierten Detektionsgrenze zur weiter entfernt liegenden oder umgekehrt.

7. Warnsystem nach einem der Ansprüche 1 bis 6, **dadurch gekennzeichnet, dass** die Auswerteeinheit (11) einen Algorithmus umfasst, welcher einen Prozessablauf analysiert und auswertet, ob beide Detektionsgrenzen gleichzeitig durchbrochen wurden.

8. Warnsystem nach einem der Ansprüche 1 bis 7, **dadurch gekennzeichnet, dass** durch Drehung des Detektionsbereichs um 90° die Position einer Unterbrechung in Form von Koordinaten zu ermitteln ist.

9. Warnsystem nach einem der Ansprüche 1 bis 8, **dadurch gekennzeichnet, dass** das Warnsystem mit einer vorgegebenen Programmierung oder frei programmierbar ausgebildet ist.

10. Verfahren zur Überwachung eines Schutz- und Detektionsbereichs mittels eines Warnsystems mit einem Detektionsbereich, einer Auswerteeinheit (11) und einer Warnanlage mit den Schritten:
- Aufnahme von Messwerten mittels eines Detektionselements, welches den Detektionsbereich definiert;
- Übermitteln der Messergebnisse an eine Auswerteeinheit;
wobei die Auswerteeinheit einen Algorithmus umfasst, welcher einen Prozessablauf analysiert und eine Zuordnung trifft, wie der Detektionsbereich durchbrochen wurde, von der näher an der Gefahrenquelle positionierten Detektionsgrenze zur weiter entfernt liegenden oder umgekehrt.

11. Verfahren zur Überwachung eines Schutz- und Detektionsbereichs mittels eines Warnsystems mit einem Detektionsbereich, einer Auswerteeinheit (11) und einer Warnanlage mit den Schritten:
- Aufnahme von Messwerten mittels eines Detektionselements, welches den Detektionsbereich definiert;
- Übermitteln der Messergebnisse an eine Auswerteeinheit (11);
wobei die Auswerteeinheit einen Algorithmus umfasst, welcher einen Prozessablauf analysiert und auswertet, ob beide Detektionsgrenzen gleichzeitig durchbrochen wurden.

12. Verfahren nach den Ansprüchen 10 oder 11, **dadurch gekennzeichnet, dass** die Auswerteeinheit (11) die Warnanlage auslöst, wenn:
- der Detektionsbereich in Form der Detektionsgrenzen von der entfernter positionierten Detektionsgrenze zur nähergelegenen Detektionsgrenze unterbrochen wurde; oder
- beide Detektionsgrenzen gleichzeitig durchbrochen wurden; oder

13. Verfahren nach den Ansprüchen 10 bis 12, **dadurch gekennzeichnet, dass** die Auswerteeinheit (11) zur Überwachung des Schutz- und Detektionsbereichs eine Kombination aus zwei Algorithmen durchführt.
